# FASCICULE DE BREVET EUROPEEN

(11) **EP 1 309 665 B1**
(45) Date de publication et mention de la délivrance du brevet: **06.05.2004**
(21) Numéro de dépôt: 01960865.2
(22) Date de dépôt: 03.08.2001
(51) Int. Cl.: C09J 7/02

(54) **ELEMENTS ADHESIFS EMPILABLES SANS PROTECTEUR**
OHNE TRENNSCHICHT STAPELBARE KLEBEELEMENTE
ADHESIVE ELEMENTS CAPABLE OF BEING STACKED WITHOUT PROTECTION

(30) Priorité: 04.08.2000 FR 0010327
(43) Date de publication de la demande: 14.05.2003
(73) Titulaire: PLASTO S.A., 21300 Chenôve (FR)
(72) Inventeur: DURAND, Hervé, F-21000 Dijon (FR); AUGUSTE, Stéphane, F-21490 VAROIS ET CHAIGNOT (FR); STAEGER, Maud, F-21000 Dijon (FR)
(74) Mandataire: Hubert, Philippe
(86) Numéro de dépôt international: PCT/FR2001/002538
(87) Numéro de publication internationale: WO 2002/012410

(56) Documents cités:
- EP-A- 0 429 269
- WO-A-80/00029
- US-A- 5 344 693

## Description

La présente invention concerne généralement des éléments adhésifs, se présentant notamment sous la forme de bandes ou de feuilles, comportant une surface pourvue d'un adhésif sensible à la pression et qui peuvent être empilés en l'absence de toute feuille intercalaire de protection anti-adhérente.

Elle trouve notamment mais non exclusivement application pour la fabrication de panneaux d'étanchéité pour véhicules automobiles.

### Art antérieur

On sait que pour stocker efficacement des bandes ou des feuilles pré-adhésivées en milieu industriel, notamment dans le domaine de l'industrie automobile, il est généralement nécessaire de former des rouleaux de bandes ou des piles de feuilles, qui, en raison de la présence d'un adhésif sur au moins l'une de leurs faces, risquent d'adhérer entre elles et de devenir alors inséparables.

Pour éviter ce risque, la solution la plus simple consiste à placer, entre chaque feuille adhésive, une feuille de protection traitée par un produit antiadhérent. Les feuilles pré-adhésivées sont alors faciles à séparer mais la présence additionnelle de la feuille anti-adhérente augmente les coûts de fabrication et de mise en oeuvre de ces feuilles et génère des déchets encombrants dans les ateliers.

Un autre moyen classique permettant d'enrouler des bandes ou d'empiler des feuilles pré-adhésivées sur une seule de leurs faces consiste à traiter la face non adhésivée de cette feuille par un composé antiadhérent tel que par exemple un revêtement siliconé. Ce traitement augmente toutefois les coûts de fabrication et supprime la possibilité de fixer solidement un autre objet adhésif sur la face traitée.

On connaît également, par le brevet US 5 322 722 un panneau d'étanchéité pourvu d'une gorge thermoformée sur sa périphérie, dans laquelle est déposé un adhésif épais que l'on recouvre d'une grille souple ; pendant le stockage, la grille fait fonction d'élément protecteur entre les panneaux empilés et, lors de la mise en place du panneau sur un support tel qu'un véhicule, il suffit d'appuyer suffisamment fort pour que l'adhésif traverse la grille et adhère au support.

On connaît aussi, par le brevet US 5 344 693 une feuille adhésive dont la surface adhésive comporte des bossages non adhésifs conformés pour permettre un enroulement de la feuille sur elle-même en évitant le contact direct entre la couche adhésive et la face non adhésive du support de la spire inférieure. Dans le mode de réalisation représenté à la figure 5, chaque bossage est formé par une surépaisseur localisée de la couche de la masse adhésive, ladite surépaisseur étant recouverte par un morceau de feuille non adhésive. Il s'agit ici d'une enduction sur toute la surface de la feuille, complexe à réaliser, et qui n'est pas utilisable pour la réalisation d'éléments adhésifs tri-dimentionnels tels que par exemple les feuilles d'étanchéité dans les portes des véhicules automobiles. En outre, une grande partie de la couche adhésive reste accessible à un contact imprévu, ce qui en rend l'utilisation plus délicate.

### Objet de l'invention

Dans ces conditions, la présente invention a pour but de résoudre le problème technique consistant en la fourniture d'éléments adhésifs d'une nouvelle conception, qui puissent être enroulés sur eux-mêmes ou empilés entre eux sans l'aide d'un élément protecteur additionnel, et dont la mise en place est aisée et plus précise qu'avec des éléments existants.

La présente invention a encore pour but de résoudre le problème technique précité d'une manière simple et réalisable à l'échelle industrielle.

### Description

La solution conforme à la présente invention pour résoudre le problème technique précité consiste, selon un premier aspect, en un élément adhésif, se présentant notamment sous la forme d'une bande ou feuille, comportant une surface pourvue d'un adhésif sensible à la pression et destinée à être assemblée par collage à un support, caractérisé en ce que ledit adhésif est présent sur au moins une partie de ladite surface, de préférence sous forme d'une couche discontinue ; et en ce qu'il présente un pouvoir adhésif réduit sur une partie de l'épaisseur d'au moins une portion de sa surface libre, définissant une pellicule très peu ou non adhérente permettant l'enroulement dudit élément ou son empilement avec d'autres éléments adhésifs sans protecteur, ladite pellicule étant en outre susceptible d'être rompue sous l'effet de la pression appliquée lors de l'assemblage dudit élément à un support.

Selon un mode de réalisation actuellement préféré de l'invention, la pellicule peu ou non adhérente précitée est obtenue par un traitement de réticulation en surface de l'adhésif sensible à la pression, de préférence un traitement de réticulation photo-induite.

Ainsi, l'originalité de la solution conforme à l'invention réside en ce que la surface de l'adhésif sensible à la pression est traitée localement par un moyen permettant de réduire notablement son pouvoir adhérent, afin de former une pellicule très peu ou non adhérente laquelle permet l'enroulement d'un élément sur lui-même ou l'empilement de plusieurs éléments entre eux sans nécessiter l'utilisation d'un moyen protecteur additionnel. En outre, la pellicule n'étant formée qu'en surface, celle-ci est susceptible de se rompre sous l'effet de la pression exercée lors de l'assemblage de l'élément adhésif avec un support, en garantissant ainsi un parfait collage.

Selon une caractéristique particulière, l'adhésif sensible à la pression sera appliqué à la structure support de l'élément adhésif sous la forme d'au moins un cordon, ou sous la forme de plots, ou encore sous la forme d'un fin cordon fibérisé déposé en spirale ou en zigzag. Avantageusement, l'adhésif sensible à la pression se présente sous une forme moussée.

Selon une autre caractéristique particulière de l'invention, l'épaisseur de l'adhésif sensible à la pression sera comprise entre 0,2 et 10 mm, tandis que l'épaisseur de la pellicule très peu ou non adhérente précitée sera comprise entre 5 et 150 µm, de préférence entre 15 et 120 µm.

Selon un second aspect, la présente demande vise à couvrir un procédé de fabrication d'un élément adhésif se présentant notamment sous la forme d'une bande ou feuille, comportant une surface pourvue d'un adhésif sensible à la pression et destinée à être assemblée par collage à un support, caractérisé en ce qu'il consiste :
- à appliquer ledit adhésif sensible à la pression sur au moins une partie de ladite surface dudit élément, de préférence sous forme d'une couche discontinue; et
- à traiter au moins une portion de la surface dudit adhésif qui n'est pas en contact avec ledit élément, de façon à y réduire notablement le pouvoir adhésif dudit adhésif, sur une partie de son épaisseur, en définissant ainsi une pellicule très peu ou non adhérente permettant l'enroulement dudit élément ou son empilement avec d'autres éléments adhésifs sans protecteur, et susceptible d'être rompue sous l'effet de la pression appliquée lors de l'assemblage dudit élément à un support.

### Description détaillée

Pour des raisons de clarté, la présente invention sera plus particulièrement décrite en référence à un mode de réalisation actuellement préféré dans lequel l'élément adhésif se présente sous la forme d'une bande ou feuille, comme par exemple un panneau d'étanchéité pour véhicule automobile.

Il est bien évident que l'élément adhésif selon l'invention peut se présenter sous d'autres formes variées.

Comme indiqué précédemment, l'élément adhésif selon l'invention, qui sera de préférence une bande ou une feuille adhésive, est recouvert sur au moins une partie de sa surface destinée à être assemblée par collage à un élément formant support, d'une couche de masse adhésive, déposée par exemple et préférentiellement sous forme d'un cordon, de préférence à section transversale sensiblement circulaire, la surface libre et accessible dudit cordon subissant ensuite localement un traitement, notamment une réticulation, destiné à réduire notablement le pouvoir adhésif de cette masse.

La structure de base de l'élément adhésif selon l'invention peut être constituée de tout type de matière, par exemple du papier, du carton, de la matière plastique sous forme de film ou de mousse, du métal comme par exemple l'aluminium, un tissu ou encore un complexe formé par l'assemblage de couches de matériaux différents.

Dans le cas des panneaux d'étanchéité pour les portières d'automobile, on préfère utiliser des feuilles de mousse de certaines matières plastiques qui présentent l'avantage, lorsque la mousse a une peau, d'être étanches et thermoformables. On peut ainsi obtenir des éléments thermoformés à trois dimensions qui s'adaptent parfaitement aux structures complexes des portières d'automobiles. On utilise notamment des feuilles en mousse de polypropylène non réticulé et ignifugé, présentant une peau sur chacune de leurs deux faces.

Les masses adhésives utilisables dans le cadre de la présente invention sont préférentiellement des masses adhésives formulées sans solvant par procédé dit « hot-melt » selon lequel les constituants sont mélangés à une température supérieure à leur température de fusion et la masse obtenue est déposée à chaud sur la structure support de l'élément à adhésiver.

De façon classique, de telles masses adhésives sont formulées avec :
- des élastomères qui assurent la cohésion de la masse adhésive
- des résines qui, en association avec les élastomères et/ou avec un plastifiant, rendent la masse adhésive collante
- éventuellement des plastifiants
- des agents de stabilité comme par exemple des antioxydants.

Les masses adhésives ainsi formulées sont déposées à chaud sur la structure support au moyen d'une buse d'extrusion. Ce procédé d'enduction présente l'avantage d'être facilement réalisable à l'aide d'un robot piloté qui peut déposer la masse adhésive sur la structure support, avec une bonne précision et une bonne reproductibilité, par exemple sous forme d'un cordon ou de plots multiples. Ce procédé est bien adapté pour obtenir une enduction discontinue, ou partielle de la structure support. Ce procédé permet également d'obtenir une enduction relativement épaisse, c'est-à-dire plus épaisse qu'une enduction habituelle recouvrant toute la surface du support sous une fine épaisseur généralement comprise entre 50 et 150 µm.

Dans le cadre du mode de réalisation actuellement préféré de l'invention, outre les constituants habituels cités ci-dessus, les masses adhésives contiennent au moins un constituant réticulable sous l'effet d'un agent extérieur, dont la réticulation entraîne une diminution notable de pouvoir adhésif de la masse. De tels constituants sont par exemple des élastomères tri-bloc de type SBS réticulables, tels que par exemple le produit commercialisé sous la marque Kraton D KX222 par la société SHELL qui peut réticuler selon un processus radicalaire, ou des élastomères linéaires de type poly(éthylène-butylène), par exemple commercialisés sous la marque KLP-L207 par la société SHELL, qui est réticulable selon un processus cationique. La réticulation est alors déclenchée par des agents initiateurs activables sous l'effet d'un rayonnement ultra-violet (UV), ajoutés à la formulation.

On peut également utiliser des masses adhésives contenant des copolymères de type acrylique formulables à chaud sans solvant, en choisissant alors des copolymères acryliques réticulables sous rayonnement UV. De tels copolymères acryliques sont par exemple commercialisés sous la marque Acresin® A 258 UV ou 203 UV par la société BASF et peuvent être formulés en association avec des élastomères de synthèse et une résine pour obtenir une masse adhésive dont le pouvoir adhésif superficiel sera diminué fortement après réticulation.

Parmi les autres constituants de la masse adhésive, on utilise préférentiellement des résines collantes dites "tackifiantes" à base d'hydrocarbures hydrogénés, comme par exemple les résines REGALITE R 1090 ou R 9100 commercialisées par la société HERCULES.

De façon pratique, une masse adhésive formulée à chaud pourra contenir environ :
- 20 à 35 % d'élastomère ou polymère réticulable
- 0 à 20 % d'élastomère non réticulable
- 45 à 65 % de résine collante
- 0 à 15 % de plastifiant
- 0,3 à 1,5 % d'antioxydant
- 0,3 à 1,5 % d'initiateur de réticulation.

Chacun des types de constituants peut correspondre à un composé pur ou à un mélange de composés ayant les propriétés requises.

De façon pratique, notamment pour l'application des feuilles adhésives destinées à une utilisation dans le domaine automobile, on utilisera une masse adhésive présentant une bonne aptitude à former une structure moussée par injection d'azote ainsi qu'un pouvoir adhésif important à la fois sur la feuille à fixer et sur la tôle peinte de la carrosserie. A cet effet, on préfèrera les masses adhésives répondant aux caractéristiques suivantes :
Viscosité Brookfield à 160 °C : 30 000 à 50 000 mPa.s
Energie de surface : 28 à 32 mJ/m²
   composante polaire : 1 à 3 mJ/m²
Pouvoir adhésif sur mousse polypropylène
   avant réticulation : > 5N/cm
   après réticulation : ≤ 1N/cm
Pouvoir adhésif sur tôle peinte : > 5N/cm

La masse adhésive est généralement formulée à chaud (140-160 °C) dans un malaxeur, suivant les techniques connues de l'homme de l'art. La masse chaude est ensuite extrudée préférentiellement sous forme d'un cordon, ledit cordon pouvant être, selon un mode de réalisation préféré, moussé par injection d'azote de façon à obtenir une surface de contact plus importante et une résistance à l'écrasement plus faible avec une même quantité de masse adhésive.

Le cordon chaud est extrudé directement sur la feuille que l'on souhaite adhésiver. Cette opération est réalisée de préférence à l'aide d'un robot qui dépose un cordon régulier suivant une trajectoire programmée, ladite trajectoire pouvant être à deux ou trois dimensions selon qu'il s'agit d'une feuille support plane ou à reliefs thermoformés. Selon un mode de réalisation avantageux, l'adhésif extrudé et moussé se présente sous forme d'un cordon de diamètre compris entre 1,5 et 10 mm.

Alternativement, la masse adhésive peut être appliquée sur la feuille en utilisant la technique dite d'enduction par fibérisation qui consiste à extruder un cordon très fin, de l'ordre de 0,2 à 1,5 mm de diamètre, en recouvrant entre 5 et 50 % de la zone de la feuille que l'on souhaite rendre adhésive.

La feuille ainsi recouverte d'un cordon adhésif sur les zones de fixation, est ensuite soumise à un traitement de réticulation superficielle, par exemple, sous l'effet d'un rayonnement U.V qui va activer les photo-initiateurs contenus dans la masse adhésive. D'une façon générale, on opèrera dans des conditions telles que seule la masse adhésive très proche de la surface qui reçoit le rayonnement U.V soit réticulée, de sorte que la majeure partie de la masse adhésive, au centre du cordon, reste non réticulée. Afin de réticuler essentiellement la surface du cordon qui sera exposée en regard de la face non adhésivée d'une autre feuille pendant le stockage en pile, il est important que le rayonnement UV initiateur de réticulation soit dirigé de préférence perpendiculairement à la feuille supportant l'adhésif.

Ainsi, le procédé selon l'invention permet d'obtenir une feuille recouverte d'un cordon de masse adhésive dont au moins une partie de la surface libre est constituée d'une sorte de pellicule ou « croûte » très fine, et pratiquement dépourvue de pouvoir adhésif. De telles feuilles pré-adhésivées pourront ainsi être superposées sans qu'il ne soit nécessaire d'interposer une feuille antiadhérente.

Pour fixer une feuille adhésivée selon l'invention sur un support, tel que par exemple un élément de carrosserie d'automobile, on place la face adhésivée de la feuille face au support puis on écrase le cordon de masse adhésive en exerçant une pression suffisante sur la face non adhésivée de la feuille: l'écrasement du cordon provoque la rupture de la couche réticulée et établit le contact entre la masse adhésive du centre du cordon et non réticulée et le support.

Les dessins annexés permettront de mieux comprendre l'invention.

La figure 1 représente en coupe transversale un cordon de masse adhésive déposée sur une feuille.

La figure 2 représente en coupe transversale une pile de feuilles adhésives comportant chacune un cordon d'adhésif sur leur périphérie.

La figure 3 représente une vue en plan d'un panneau comprenant sur son pourtour un cordon de masse adhésive, ledit cordon pouvant être simple et parallèle à la lisière (fig. 3a) ou fin et fibérisé (fig. 3b) en recouvrant une zone de contact périphérique.

La figure 4 représente en coupe transversale une feuille adhésivée selon l'invention après écrasement du cordon sur un support.

La figure 5 représente en coupe un exemple d'empilement pour des feuilles ou une bande adhésivée sur leurs deux faces au moyen de cordons parallèles de masse adhésive.

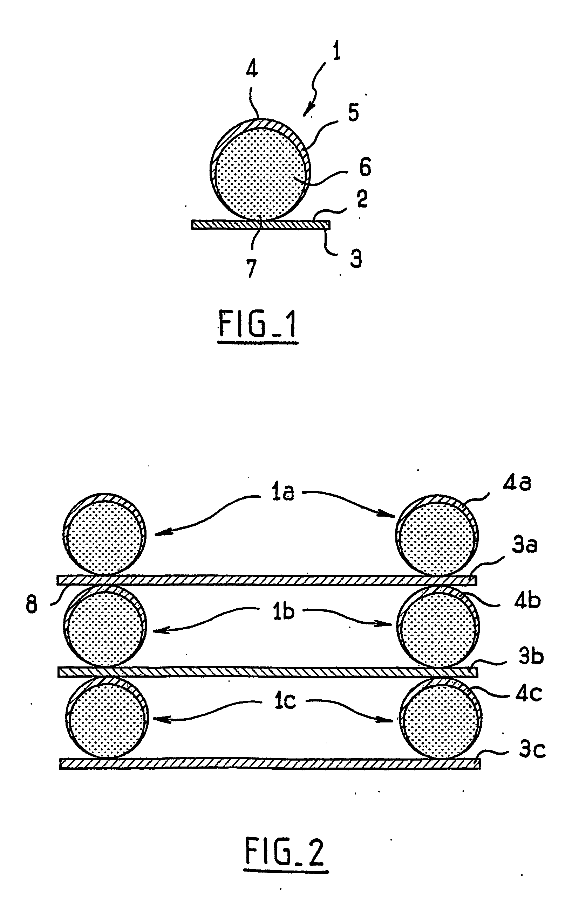

La figure 1 représente en coupe un cordon de masse adhésive 1 après l'opération de réticulation par un rayonnement UV diffusé perpendiculairement à la surface 2 adhésivée d'une feuille 3. La surface libre 4 du cordon 1 et notamment la partie supérieure la plus exposée au rayonnement UV est réticulée sur une faible épaisseur, de l'ordre de 15 à 120 µm et forme une sorte de pellicule ou croûte 5 non collante qui recouvre la masse adhésive intérieure et non réticulée 6. La partie 7 du cordon 1 en contact avec la feuille 3 ne peut pas recevoir le rayonnement U.V et ne subit pas de réticulation.

La figure 2 représente une pile de trois feuilles adhésivées selon l'invention. La face inférieure libre 8 de la feuille 3a est en contact avec le cordon 1b de la feuille 3b située au-dessous. Le contact s'établit entre la feuille 3a et la surface réticulée non adhésive 4b du cordon 1b. On peut donc facilement séparer les deux feuilles, au moins tant que le cordon n'est pas écrasé sous l'effet d'une pression importante. De la même manière, la feuille 3b est en contact avec la surface réticulée non adhésive 4c du cordon 1c qui est disposé sur la feuille 3c.

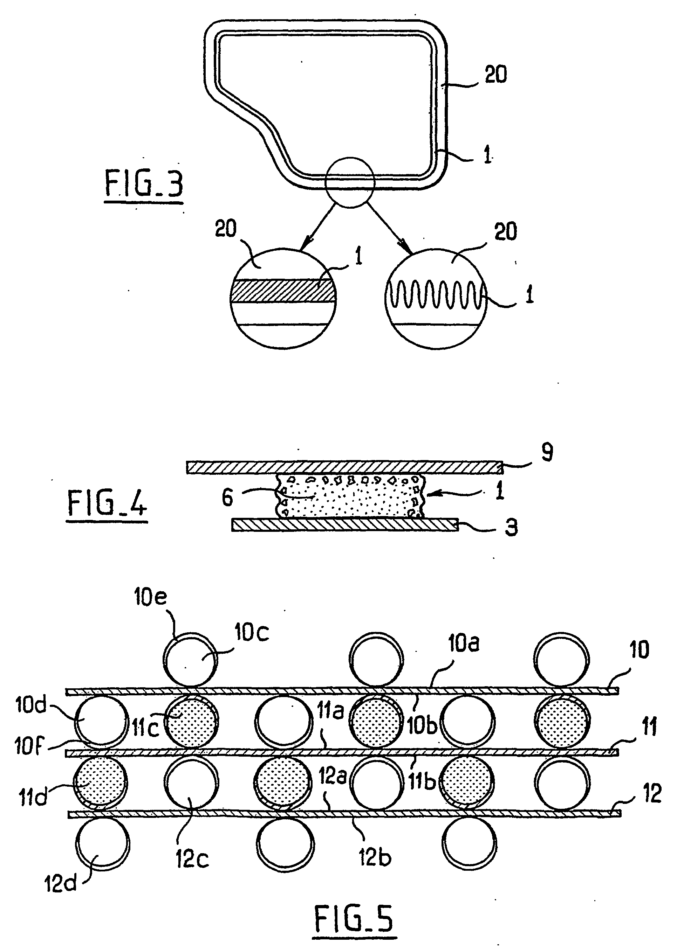

La figure 3 représente un exemple de réalisation tel qu'un panneau d'étanchéité de portière d'automobile 20 qui peut être fixé sur la structure de carrosserie au moyen d'un cordon adhésif selon l'invention, ledit cordon étant déposé à la périphérie du panneau soit de façon conventionnelle, fig. 3a, soit par la technique dite de fibérisation, fig. 3b, qui met en oeuvre un cordon de très faible diamètre que l'on dispose en spirale ou en zigzag sur la surface à adhésiver.

La figure 4 représente en coupe transversale le cordon 1 déposé sur la feuille support 3 et après écrasement par un autre support 9 : la pellicule superficielle réticulée 5 a été rompue et la masse adhésive 6 collante établit le contact et la jonction entre le support 9 et la feuille 3.

La figure 5 représente plusieurs feuilles support 10, 11, 12 empilables les unes sur les autres sans interposition d'un organe séparateur anti-adhérent. La feuille 10 est munie sur ses deux faces 10a et 10b d'au moins un cordon 10c, 10d dont la surface extérieure 10e, 10f a été réticulée de la manière indiquée précédemment à propos notamment des figures 1 et 2. Les cordons 11c disposés sur la face supérieure 11a de la feuille 11 s'intercalent entre les cordons 10d de la feuille 10 alors que les cordons 11d disposés sur la face 11b de la feuille 11 s'intercalent entre les cordons 12c disposés sur la face 12a de la feuille 12 qui peut être munie sur sa face inférieure 12b de cordons 12d. Bien évidemment les surfaces extérieures des cordons 11c, 11d, 12c et 12d sont également réticulées pour qu'elles n'adhèrent pas ou adhèrent très peu sur les faces en regard des feuilles superposées.

Il est évident qu'en lieu et place d'un cordon de masse adhésive on peut utiliser des plots de masse adhésive, distribués de manière appropriée sur la surface de la feuille support sur laquelle ils sont disposés.

L'exemple de réalisation qui suit donné à titre non-limitatif concerne un panneau d'étanchéité pour portière de voiture, ledit panneau étant prévu pour être fixé de façon étanche sur la structure métallique peinte de la porte.

On prépare une masse adhésive en mélangeant dans un malaxeur à 160 °C, 30 kg d'huile de paraffine (ONDINA® 68 fournie par la société SHELL), 3 kg d'antioxydant (IRGANOX 1010 obtenu chez CIBA-GEIGY), 28,5 kg d'élastomère tribloc styrène-isoprène-styrène à 21 % environ de blocs styrène (Kraton D 1111 obtenu chez SHELL), 14,3 kg d'élastomère tribloc styrène-isoprène-styrène contenant environ 25 % de blocs styrène (SOLT 1938, obtenu chez ENI CHEM) et 57,2 kg d'élastomère tribloc styrène-butadiène-styrène réticulable (Kraton D KX222C, obtenu chez SHELL). Quand le mélange est homogène, on ajoute 150 kg de résine à base d'hydrocarbures hydrogénés (Regalite R1090, fournie par la société HERCULES) puis 3 kg de photo-initiateur radicalaire (IRGACURE® 651, fourni par la société CIBA-GEIGY).

La masse ainsi formulée est déposée à chaud sous forme d'un cordon moussé à l'azote sur une feuille de mousse de polypropylène traitée par le procédé CORONA sur la face recevant l'adhésif. Le cordon est moussé à raison d'environ 50 % de gaz et présente un diamètre d'environ 6 mm. La feuille ainsi adhésivée sur sa face supérieure passe ensuite sous des lampes U.V développant une puissance de 120W/cm : le rayonnement provoque la réticulation de la surface du cordon sur une épaisseur d'environ 40 à 100 µm, ladite surface voyant ainsi son pouvoir adhésif chuter de 6,4 à 0,9 N/cm. Les feuilles ainsi obtenues peuvent être empilées sans nécessité d'interposer un protecteur antiadhérent.

La mise en place de tels panneaux d'étanchéité sur la structure de porte se fait de façon pratiquement analogue à la procédure habituelle : le panneau est présenté à son emplacement, puis le cordon (qui peut être visible au travers du panneau si celui-ci est translucide) est écrasé sur toute sa longueur à l'aide d'une roulette. La masse adhésive collante assure la liaison et l'étanchéité entre la feuille et la structure support.

Un second exemple de réalisation a mis en oeuvre les constituants suivants :
élastomère Kraton D 1111 : 66,7 kg
   Solt T 193B : 33,3 kg
résine : Régalite R1090 : 150 kg
résine acrylique réticulable : Acresin® A 258 UV(BASF) : 60 kg
plastifiant : ONDINA® 68: 30 kg
antioxydant : IRGANOX 1010 : 3 kg

La masse adhésive obtenue, mise en oeuvre et réticulée dans des conditions analogues à celles décrites pour l'exemple précédent, donne des résultats sensiblement identiques.

D'autres élastomères réticulables peuvent être utilisés dans le cadre de la présente invention, tels que par exemple les élastomères tribloc liquides réticulables que l'on peut obtenir auprès de la société SHELL sous la référence KLP L 207 et KLP L 1203 et que l'on doit formuler avec un photo-initiateur de réticulation cationique.

Ces exemples de formulation, ainsi que les exemples d'application, décrits pour illustrer l'invention, ne doivent pas être considérés comme limitatifs. Ainsi par exemple, la bande ou la feuille adhésive peut se présenter sous forme d'un ruban enroulé sur lui-même sans protecteur, toute la largeur de l'une des faces étant recouverte de masse adhésive déposée par fibérisation.

On peut également obtenir des feuilles adhésivées sur leurs deux faces au moyen de cordons de masse adhésive réticulée en surface, en veillant de préférence à ce que les parties adhésivées des faces opposées soient alternées dans la pile comme représenté sur la figure 5 où les cordons adhésifs de la feuille 10 sont opposés à des zones non adhésivées de la feuille 11.

L'invention s'applique également à la réalisation d'un adhésif double face obtenu par enrobage des fils d'une trame polyester (par exemple commercialisé par TEXINOV sous la référence 355) qui sert de support en forme de grille, en laissant les ouvertures de mailles ouvertes. La masse adhésive, réticulée sur les deux faces, ne libère son pouvoir adhésif qu'après écrasement de la masse entre les deux objets à assembler.

Les avantages procurés par la présente invention sont nombreux.

Ainsi, les bandes ou feuilles adhésives selon l'invention permettent la mise en oeuvre de masse à fort pouvoir adhésif sans qu'il ne soit nécessaire d'utiliser des protecteurs anti-adhérents qui sont à l'origine de déchets coûteux et encombrants. Il en résulte un gain substantiel de temps de main d'oeuvre, en raison de la suppression de l'opération de retrait du protecteur. En outre, la mise en place de la feuille adhésivée est facilitée et précise. En effet, la fixation définitive n'étant obtenue qu'après écrasement du cordon, il est possible de positionner précisément la feuille sans être gêné par un collage prématuré d'une partie de la zone adhésive.

La différence importante de pouvoir adhésif avant et après écrasement du cordon à surface réticulée permet ainsi d'assembler un objet préadhésivé à un support d'une manière originale et qui n'était pas possible précédemment.

Ce procédé de pose consiste essentiellement à :
a/ présenter l'objet préadhésivé sur le support récepteur et le fixer sans appuyer fortement de façon à obtenir une fixation légère et repositionnable
b/ vérifier le positionnement correct de l'objet sur le support
c/ si nécessaire corriger la position de l'objet sur le support
d/fixer fortement l'objet préadhésivé sur le support en exerçant une pression importantes au niveau des parties adhésivées de l'objet.

La fixation ainsi obtenue est particulièrement efficace et rend impossible une éventuelle séparation de l'objet et de son support sans destruction de l'un au moins des éléments objet/adhésif/support.

L'invention trouve principalement application dans les domaines de l'industrie nécessitant des adhésifs de fixation ou d'étanchéité : fixation de panneau d'étanchéité, d'obturateur et de câbles dans les automobiles, fixation de câbles ou assemblage dans les bâtiments. L'invention s'applique également au domaine du bricolage pour effectuer des assemblages ou des fixations habituellement réalisés avec un ruban adhésif ou des accessoires préadhésivés tels que par exemple des joints, des crochets, des baguettes de décoration ou de passage des fils électriques.

## Revendications

1. Elément adhésif, se présentant notamment sous la forme d'une bande ou feuille (3), comportant une surface (2) pourvue d'un adhésif sensible à la pression et destinée à être assemblée par collage à un support, **caractérisé en ce que** ledit adhésif est présent sur au moins une partie de ladite surface (2), de préférence sous forme d'une couche discontinue et **en ce qu'**il présente un pouvoir adhésif réduit sur une partie de l'épaisseur d'au moins une portion de sa surface (4) libre, définissant une pellicule (5) très peu ou non adhérente permettant l'enroulement dudit élément ou son empilement avec d'autres éléments adhésifs sans protecteur, ladite pellicule (5) étant obtenue par un traitement de réticulation en surface et étant en outre susceptible d'être rompue sous l'effet de la pression appliquée lors de l'assemblage dudit élément à un support.

2. Elément adhésif selon la revendication 1, **caractérisé en ce que** la pellicule (5) très peu ou non adhérente précitée est obtenue par un traitement de réticulation photo-induite, dudit adhésif sensible à la pression.

3. Elément adhésif selon la revendication 1 ou 2, **caractérisé en ce que** l'adhésif sensible à la pression précité se présente sous la forme d'au moins un cordon.

4. Elément adhésif selon la revendication 1 ou 2, **caractérisé en ce que** l'adhésif sensible à la pression précité se présente sous la forme de plots.

5. Elément adhésif selon la revendication 1 ou 2, **caractérisé en ce que** l'adhésif sensible à la pression précité se présente sous la forme d'un fin cordon fibérisé déposé en spirale ou en zigzag.

6. Elément adhésif selon l'une des revendications 1 à 5, **caractérisé en ce que** l'adhésif sensible à la pression précité se présente sous une forme moussée.

7. Elément adhésif selon l'une des revendications 1 à 6, **caractérisé en ce que** l'adhésif sensible à la pression précité présente une épaisseur comprise entre 0,2 et 10 mm.

8. Elément adhésif selon l'une des revendications 1 à 7, **caractérisé en ce que** la pellicule (5) précitée, de préférence réticulée, présente une épaisseur comprise entre 5 et 150 µm, de préférence entre 15 et 120 µm.

9. Elément adhésif selon l'une des revendications 1 à 8, **caractérisé en ce qu'**il se présente sous la forme d'une bande ou feuille, dont chaque face (10a, 10b ; 11a, 11b ; 12a, 12b) comprend des cordons ou plots (10c, 10d ; 11c, 11d ; 12c, 12d) disposés de telle sorte que lesdits cordons ou plots d'une face s'intercalent entre les cordons ou plots de la feuille ou bande consécutive pour permettre ainsi un empilage de bandes ou feuilles sans protecteur intercalaire.

10. Elément adhésif selon l'une des revendications 1 à 9, **caractérisé en ce qu'**il se présente sous la forme d'une feuille adhésive en mousse de propylène non réticulé thermoformable.

11. Procédé de fabrication d'un élément adhésif se présentant notamment sous la forme d'une bande ou feuille (3), comportant une surface (2) pourvue d'un adhésif sensible à la pression et destinée à être assemblée par collage à un support, **caractérisé en ce qu'**il consiste :
- à appliquer ledit adhésif sensible à la pression sur au moins une partie de ladite surface (2) dudit élément, de préférence sous forme d'une couche discontinue; et
- à traiter au moins une portion de la surface (4) dudit adhésif qui n'est pas en contact avec ledit élément, de façon à y réduire notablement le pouvoir adhésif dudit adhésif, sur une partie de son épaisseur, en définissant ainsi une pellicule très peu ou non adhérente permettant l'enroulement dudit élément ou son empilement avec d'autres éléments adhésifs sans protecteur, et susceptible d'être rompue sous l'effet de la pression appliquée lors de l'assemblage dudit élément à un support.

12. Procédé selon la revendication 11, **caractérisé en ce que** le traitement précité est un traitement de réticulation en surface, de préférence photo-induite, dudit adhésif sensible à la pression.

13. Procédé selon la revendication 11 ou 12, **caractérisé en ce que** l'adhésif sensible à la pression précité est appliqué sous forme d'au moins un cordon.

14. Procédé selon la revendication 11 ou 12, **caractérisé en ce que** l'adhésif sensible à la pression précité est appliqué sous forme de plots.

15. Procédé selon la revendication 11 ou 12, **caractérisé en ce que** l'adhésif sensible à la pression précité est appliqué sous forme d'un fin cordon fibérisé déposé en spirale ou en zigzag.

16. Procédé selon l'une des revendications 11 à 15, **caractérisé en ce que** l'adhésif sensible à la pression précité est appliqué sous forme moussée.

17. Procédé selon l'une des revendications 11 à 16, **caractérisé en ce que** l'adhésif sensible à la pression précité est appliqué sur une épaisseur comprise entre 0,2 et 10 mm.

18. Procédé selon l'une des revendications 11 à 17, **caractérisé en ce que** l'adhésif sensible à la pression précité est traité dans des conditions permettant d'obtenir une pellicule, de préférence réticulée, dont l'épaisseur est comprise entre 5 et 150 µm, de préférence entre 15 et 120 µm.

## Patentansprüche

1. Klebeelement, insbesondere in Form eines Bandes oder einer Folie (3), das eine Oberfläche (2) aufweist, die mit einem druckempfindlichen Klebstoff versehen und dazu bestimmt ist, durch Verklebung mit einem Träger verbunden zu werden,
**dadurch gekennzeichnet, dass** der Klebstoff auf wenigstens einem Teil der Oberfläche (2) vorzugsweise in Form einer nicht kontinuierlichen Schicht vorhanden ist und in einem Teil der Dicke wenigstens eines Abschnitts seiner freien Oberfläche (4) ein vermindertes Haftvermögen aufweist, wobei ein sehr gering oder gar nicht haftender Film (5) gebildet wird, der das Aufrollen des Elements oder dessen Stapeln mit anderen Klebeelementen ohne Schutzschicht ermöglicht, wobei der Film (5) durch ein Verfahren zur Oberflächenvernetzung erzielt wird und ferner unter Einwirkung des Drucks, der beim Verbinden des Elements mit einem Träger aufgebracht wird, zu brechen vermag.

2. Klebeelement nach Anspruch 1,
**dadurch gekennzeichnet, dass** der vorstehend genannte, sehr gering oder gar nicht haftende Film (5) durch ein Verfahren zur photoinduzierten Vernetzung des druckempfindlichen Klebstoffs erzielt wird.

3. Klebeelement nach Anspruch 1 oder 2,
**dadurch gekennzeichnet, dass** der vorstehend genannte druckempfindliche Klebstoff die Form wenigstens einer Raupe hat.

4. Klebeelement nach Anspruch 1 oder 2,
**dadurch gekennzeichnet, dass** der vorstehend genannte druckempfindliche Klebstoff die Form von Stiften hat.

5. Klebeelement nach Anspruch 1 oder 2,
**dadurch gekennzeichnet, dass** der vorstehend genannte druckempfindliche Klebstoff die Form einer dünnen aufgesprühten Raupe hat, die spiral- oder zickzackförmig aufgebracht ist.

6. Klebeelement nach einem der Ansprüche 1 bis 5,
**dadurch gekennzeichnet, dass** der vorstehend genannte druckempfindliche Klebstoff eine Schaumform hat.

7. Klebeelement nach einem der Ansprüche 1 bis 6,
**dadurch gekennzeichnet, dass** der vorstehend genannte druckempfindliche Klebstoff eine Dicke von 0,2 bis 10 mm aufweist.

8. Klebeelement nach einem der Ansprüche 1 bis 7,
**dadurch gekennzeichnet, dass** der vorstehend genannte, vorzugsweise vernetzte Film (5) eine Dicke von 5 bis 150 µm, vorzugsweise von 15 bis 120 µm hat.

9. Klebeelement nach einem der Ansprüche 1 bis 8,
**dadurch gekennzeichnet, dass** es die Form eines Bandes oder einer Folie hat, bei dem bzw. der jede Seite (10a, 10b; 11a, 11b; 12a, 12b) Raupen oder Stifte (10c, 10d; 11c, 11d; 12c, 12d) aufweist, die derart angeordnet sind, dass sich die Raupen oder Stifte einer Seite zwischen die Raupen oder Stifte der darauffolgenden Folie oder des darauffolgenden Bandes schieben, um somit ein Stapeln von Bändern oder Folien ohne zwischenliegende Schutzschicht zu ermöglichen.

10. Klebeelement nach einem der Ansprüche 1 bis 9,
**dadurch gekennzeichnet, dass** es die Form einer Klebefolie aus nicht vernetztem thermoformbarem Propylenschaum hat.

11. Verfahren zum Herstellen eines Klebeelements, das insbesondere die Form eines Bandes oder einer Folie (3) hat und eine Oberfläche (2) aufweist, die mit einem druckempfindlichen Klebstoff versehen und dazu bestimmt ist, durch Verklebung mit einem Träger verbunden zu werden,
**dadurch gekennzeichnet, dass** es darin besteht:
- den druckempfindlichen Klebstoff auf wenigstens einen Teil der Oberfläche (2) des Elements vorzugsweise in Form einer nicht kontinuierlichen Schicht aufzutragen; und
- wenigstens einen Abschnitt der Oberfläche (4) des Klebstoff, der nicht in Kontakt mit dem Element ist, so zu behandeln, dass dort das Haftvermögen des Klebstoffs in einem Teil seiner Dicke deutlich verringert wird, wobei auf diese Weise ein sehr gering oder gar nicht haftender Film gebildet wird, der das Aufrollen des Elements oder dessen Stapeln mit anderen Klebeelementen ohne Schutzschicht ermöglicht und der unter der Einwirkung des Drucks, der beim Verbinden des Elements mit dem Träger aufgebracht wird, zu brechen vermag.

12. Verfahren nach Anspruch 11,
**dadurch gekennzeichnet, dass** die vorstehend genannte Behandlung ein Verfahren zum vorzugsweise photoinduzierten Vernetzen der Oberfläche des druckempfindlichen Klebstoffs ist.

13. Verfahren nach Anspruch 11 oder 12,
**dadurch gekennzeichnet, dass** der vorstehend genannte druckempfindliche Klebstoff in Form wenigstens einer Raupe aufgetragen wird.

14. Verfahren nach Anspruch 11 oder 12,
**dadurch gekennzeichnet, dass** der vorstehend genannte druckempfindliche Klebstoff in Form von Stiften aufgetragen wird

15. Verfahren nach Anspruch 11 oder 12,
**dadurch gekennzeichnet, dass** der vorstehend genannte druckempfindliche Klebstoff in Form einer dünnen aufgesprühten Raupe aufgetragen wird, die spiral- oder zickzackförmig aufgebracht wird.

16. Verfahren nach einem der Ansprüche 11 bis 15,
**dadurch gekennzeichnet, dass** der vorstehend genannte druckempfindliche Klebstoff schaumförmig aufgetragen wird.

17. Verfahren nach einem der Ansprüche 11 bis 16,
**dadurch gekennzeichnet, dass** der vorstehend genannte druckempfindliche Klebstoff in einer Dicke von 0,2 bis 10 mm aufgetragen wird.

18. Verfahren nach einem der Ansprüche 11 bis 17,
**dadurch gekennzeichnet, dass** der vorstehend genannte druckempfindliche Klebstoff unter Bedingungen behandelt wird, die es ermöglichen, einen vorzugsweise vernetzten Film zu erhalten, dessen Dicke 5 bis 150 µm, vorzugsweise 15 bis 120 µm beträgt.

## Claims

1. Adhesive element, especially in the form of a strip or sheet (3), comprising a surface (2) provided with a pressure-sensitive adhesive and designed to be assembled on a substrate by bonding, **characterized in that** said adhesive is present over at least part of said surface (2), preferably in the form of a discontinuous layer, and **in that** it has a reduced adhesive capacity over part of the thickness of at least one portion of its free surface (4), defining a very slightly adhesive or non-adhesive film (5) enabling said element to be rolled up or stacked with other adhesive elements without protection, said film (5) being obtained by a surface crosslinking treatment and also being capable of being broken under the effect of the pressure applied when said element is assembled to a substrate.

2. Adhesive element according to claim 1, **characterized in that** the very slightly adhesive or non-adhesive film (5) mentioned above is obtained by a surface photoinduced crosslinking treatment of said pressure-sensitive adhesive.

3. Adhesive element according to claim 1 or 2, **characterized in that** the above-mentioned pressure-sensitive adhesive is in the form of at least one bead.

4. Adhesive element according to claim 1 or 2, **characterized in that** the above-mentioned pressure-sensitive adhesive is in the form of a pattern of dots.

5. Adhesive element according to claim 1 or 2, **characterized in that** the above-mentioned pressure-sensitive adhesive is in the form of a thin fiberized bead deposited in a spiral or zig-zag pattern.

6. Adhesive element according to one of claims 1 to 5, **characterized in that** the above-mentioned pressure-sensitive adhesive is in the form of a foam.

7. Adhesive element according to one of claims 1 to 6, **characterized in that** the above-mentioned pressure-sensitive adhesive has a thickness of between 0.2 and 10 mm.

8. Adhesive element according to one of claims 1 to 7, **characterized in that** the preferably crosslinked film (5) mentioned above has a thickness of between 5 and 150 µm and preferably of between 15 and 120 µm.

9. Adhesive element according to one of claims 1 to 8, **characterized in that** it is in the form of a strip or sheet, each side of which (10a, 10b; 11a, 11b; 12a, 12b) carries beads or a pattern of dots (10c, 10d; 11c, 11d; 12c, 12d) arranged so that said beads or a pattern of dots on one side are intercalated between the beads or a pattern of dots of the consecutive sheet or strip, thereby enabling strips or sheets to be stacked without the intercalation of a protector.

10. Adhesive element according to one of claims 1 to 9, **characterized in that** it is in the form of an adhesive foam sheet of thermoformable non-crosslinked propylene.

11. Process for the manufacture of an adhesive element, especially in the form of a strip or sheet (3), comprising a surface (2) provided with a pressure-sensitive adhesive and designed to be assembled to a substrate by bonding, **characterized in that** it consists in:
- applying said pressure-sensitive adhesive over at least part of said surface (2) of said element, preferably in the form of a discontinuous layer; and
- treating at least one portion of the surface (4) of said adhesive which is not in contact with said element so as appreciably to reduce the adhesive capacity of said adhesive over part of the thickness of said portion(s), thereby defining a very slightly adhesive or non-adhesive film enabling said element to be rolled up or stacked with other adhesive elements without protection, said film being capable of being broken under the effect of the pressure applied when said element is assembled to a substrate.

12. Process according to claim 11, **characterized in that** the above-mentioned treatment is a surface crosslinking treatment of said pressure-sensitive adhesive, preferably a photoinduced crosslinking treatment.

13. Process according to claim 11 or 12, **characterized in that** the above-mentioned pressure-sensitive adhesive is applied in the form of at least one bead.

14. Process according to claim 11 or 12, **characterized in that** the above-mentioned pressure-sensitive adhesive is applied in the form of a pattern of dots.

15. Process according to claim 11 or 12, **characterized in that** the above-mentioned pressure-sensitive adhesive is applied in the form of a thin fiberized bead deposited in a spiral or zig-zag pattern.

16. Process according to one of claims 11 to 15, **characterized in that** the above-mentioned pressure-sensitive adhesive is applied in the form of a foam.

17. Process according to one of claims 11 to 16, **characterized in that** the above-mentioned pressure-sensitive adhesive is applied in a thickness of between 0.2 and 10 mm.

18. Process according to one of claims 11 to 17, **characterized in that** the above-mentioned pressure-sensitive adhesive is treated under conditions suitable for obtaining a preferably crosslinked film whose thickness is between 5 and 150 µm and preferably between 15 and 120 µm.
